# EUROPÄISCHE PATENTSCHRIFT

(11) **EP 3 478 536 B1**
(45) Veröffentlichungstag und Bekanntmachung des Hinweises auf die Patenterteilung: **02.11.2022**
(21) Anmeldenummer: 17730130.6
(22) Anmeldetag: 14.06.2017
(51) Int. Cl.: B60Q 3/18, B60Q 3/80, B60Q 9/00, B60Q 3/78

(54) **KRAFTFAHRZEUG**
MOTOR VEHICLE
VÉHICULE AUTOMOBILE

(30) Priorität: 29.06.2016 DE 102016211737
(43) Veröffentlichungstag der Anmeldung: 08.05.2019
(73) Patentinhaber: Bayerische Motoren Werke Aktiengesellschaft, 80809 München (DE)
(72) Erfinder: MUELLER, Michael, 81243 München (DE); BAUER, Christian, 81545 München (DE); RAASCH, Daniel, 80637 München (DE)
(86) Internationale Anmeldenummer: PCT/EP2017/064467
(87) Internationale Veröffentlichungsnummer: WO 2018/001724

(56) Entgegenhaltungen:
- WO-A1-2017/071972
- WO-A2-2009/011898
- DE-A1- 10 037 131
- DE-A1-102008 064 022
- DE-A1-102013 225 852
- DE-A1-102015 008 233
- JP-A- 2007 276 671
- US-A1- 2005 063 194
- US-A1- 2015 198 319

## Beschreibung

Die Erfindung betrifft ein Kraftfahrzeug mit einer Vielzahl von Innenraum-Lichtmodulen.

Neuere Kraftfahrzeuge verfügen im Innenraum zunehmend über sogenannte ambiente Lichtfunktionen, die je nach Fahrzeugtyp oder Zielgruppe für eine dezente oder auffallende Ausleuchtung des Innenraumes sorgen. Der Einsatz dieser Art der Beleuchtung erleichtert den Passagieren im Fahrzeug die Orientierung und schafft eine individuelle und angenehme Atmosphäre. Die Steuerung und Definition der Lichtfunktionen wird dabei in der Regel durch ein zentrales Steuergerät realisiert.

Die US 2015/0198319 A1 offenbart ein Kraftfahrzeug mit einem zentralen Steuergerät und einer Vielzahl von Lichtsteuergeräten, an die jeweils eine Lichtquelle oder eine Gruppierung von Lichtquellen zur Erzeugung eines Farblichts angeschlossen ist. Das zentrale Steuergerät und die Vielzahl von Lichtsteuergeräten sind über einen Datenbus miteinander gekoppelt, wobei die Lichtsteuergeräte beim Empfang eines Signals von dem zentralen Steuergerät visuelle Effekte, wie z.B. ein Lauflicht, erzeugen.

Die DE 10 2015 008 233 A1 offenbart ein Verfahren zur Signalisierung von sich nähernden Objekten, bei dem vorhandene Lichtquellen in dem Fahrzeug genutzt werden, um auf der dem sich nähernden Objekt zugewandten Seite des Fahrzeugs in einen blinkenden Modus geschaltet zu werden. Alternativ wird ein Lauflicht vorgeschlagen, sodass Licht insbesondere zu der Seite des Fahrzeugs läuft, auf welcher sich ein Objekt, z.B. Radfahrer, dem Fahrzeug nähert.

Die US 2005/0063194 A1 offenbart ein Beleuchtungssystem mit einem Leuchtmodul mit smarten Lichtquellen, die jeweils einen Mikroprozessor umfassen und zur Erzeugung einer Lichtszene ein Signal von einem zentralen Steuergerät erhalten. Das Beleuchtungssystem kann in einem Fahrzeug verbaut sein.

Die DE 10 2013 225 852 A1 offenbart ein Verfahren zum Steuern von zumindest einer Beleuchtungseinrichtung eines Fahrzeugs. Wenn ermittelt wurde, dass ein Fahrzeuginsasse beabsichtigt auszusteigen und eine Kollisionsgefahr mit einem sich bewegenden Objekt besteht, wird ein Lichtszenario mit einer statischen Lichtemission im Innenraum des Fahrzeugs erzeugt. Wenn der Insasse sicher aussteigen kann, wird ein Lichtszenario mit sich örtlich verändernder Lichtemission erzeugt.

Der Erfindung liegt die Aufgabe zu Grunde, ein verbessertes Kraftfahrzeug zu schaffen.

Diese Aufgabe wird gelöst durch die Merkmale des unabhängigen Patentanspruchs. Vorteilhafte Weiterbildungen der Erfindung ergeben sich aus den abhängigen Ansprüchen.

Ein erfindungsgemäßes Kraftfahrzeug umfasst ein Zentral-Lichtsteuergerät und eine Vielzahl von im Kraftfahrzeug verteilten Peripherie-Lichtsteuergeräten. Zudem ist eine Vielzahl von Innenraum-Lichtmodulen vorgesehen, die jeweils eine Vielzahl von Lichtquellen umfassen, und die jeweils einem Peripherie-Lichtsteuergerät zugeordnet sind, insbesondere mit diesem datentechnisch gekoppelt sind.

Über einen Datenbus sind das Zentral-Lichtsteuergerät und die Peripherie-Lichtsteuergeräte miteinander gekoppelt.

Das Zentral-Lichtsteuergerät ist dazu eingerichtet, zur Auslösung von Kraftfahrzeuginnenraum-Lichteffekten Lichteffekt-Kennungen an Peripherie-Lichtsteuergeräte zu übertragen. Zur Auslösung eines vorgegebenen Kraftfahrzeuginnenraum-Lichteffekts können an verschiedene Peripherie-Lichtsteuergeräte beispielsweise identische oder verschiedene vorgegebene Lichteffekt-Kennungen gesendet werden.

In Reaktion auf den Empfang der identischen oder verschiedenen vorgegebenen Lichteffekt-Kennungen durch die Peripherie-Lichtsteuergeräte wird durch die den Peripherie-Lichtsteuergeräten zugeordneten Innenraum-Lichtmodule ein Lauflicht erzeugt, das durch die vorgegebenen Lichteffekt-Kennungen bestimmt ist. Vorzugsweise werden in Reaktion auf den Empfang der identischen oder verschiedenen vorgegebenen Lichteffekt-Kennungen durch die Peripherie-Lichtsteuergeräte die den Peripherie-Lichtsteuergeräten zugeordneten Innenraum-Lichtmodule durch die Peripherie-Lichtsteuergeräten derart angesteuert, dass ein Lauflicht erzeugt wird, das durch die vorgegebenen Lichteffekt-Kennungen bestimmt ist.

Ferner ist eine Gefahrenerkennungseinrichtung zur Ausgabe eines Gefahrensignales in Reaktion auf die Erkennung einer Gefahr vorgesehen, wobei die Gefahrenerkennungseinrichtung derart mit dem Zentral-Lichtsteuergerät gekoppelt ist, und das Zentral-Lichtsteuergerät derart eingerichtet ist, dass in Reaktion auf ein ausgegebenes Gefahrensignal durch das Zentral-Lichtsteuergerät vorgegebene Lichteffekt-Kennungen (verschiedene oder identische) zur Auslösung des Lauflichtes an die Peripherie-Lichtsteuergeräte übertragen wird.

Weiter wird in Reaktion auf den Empfang der mindestens einen vorgegebenen Lichteffekt-Kennung durch die Peripherie-Lichtsteuergeräte durch die den Peripherie-Lichtsteuergeräten zugeordneten Innenraum-Lichtmodule zuerst ein Aufmerksamkeitslicht erzeugt, dann werden das oder die Innenraum-Lichtmodule abgedimmt und dann wird ein Lauflicht erzeugt.

Dadurch kann mit einem auffälligen Lauflicht ein Fahrer des Kraftfahrzeuges beispielsweise auf eine mögliche Kollisionsgefahr aufmerksam gemacht werden.

Bei der Gefahrenerkennungseinrichtung kann es sich um ein rechnergestütztes Kamerasystem und/oder ein an sich bekanntes Kraftfahrzeugassistenzsystem handeln, durch die beispielsweise beim Erkennen eines Hindernisses oder eines möglichen Kollisionsobjektes ein Gefahrensignal ausgegeben wird.

Vorzugsweise sind in dem Zentral-Lichtsteuergerät verschiedenen Gefahrensignalen verschiedene Lichteffekt-Kennungen oder Gruppen von Lichteffekt-Kennungen zugeordnet, und ist das Zentral-Lichtsteuergerät derart eingerichtet ist, dass automatisch, abhängig von einem empfangenen Gefahrensignal mindestens eine Lichteffekt-Kennung oder Gruppen von Lichteffekt-Kennungen an Peripherie-Lichtsteuergeräte übertragen werden. Dazu sind in dem Zentral-Lichtsteuergerät, beispielsweise in einem Datenspeicher, Informationen über Zuordnungen von Lichteffekt-Kennungen zu Gefahrensignalen abgelegt.

Dadurch können aufwändige, den gesamten Kraftfahrzeuginnenraum betreffende Lichteffekte, insbesondere Lauflichter, abhängig von aktuellen Gefahrensignalen einfach in die Praxis umgesetzt werden.

Besonders bevorzugt ist dabei vorgesehen, dass der Abstand zwischen einem oder jedem Peripherie-Lichtsteuergerät und dem Zentral-Lichtsteuergerät dreimal so groß, fünfmal so groß, zehnmal so groß oder zwanzigmal so groß ist wie der Abstand zwischen dem Peripherie-Lichtsteuergerät und dem zugeordneten Innenraum-Lichtmodul.

Peripherie-Lichtsteuergeräte können beispielsweise an den Türinnenseiten, im Türinneren, am Kraftfahrzeug-Dachhimmel, verdeckt durch den Kraftfahrzeughimmel, an oder in der Kraftfahrzeug-A-Säule, an oder in der Kraftfahrzeug-B-Säule, an oder in der Kraftfahrzeug-C-Säule, am Handschuhfach, um Bedienelemente, um ein Display und/oder auf einer Instrumententafel angeordnet sein, oder Bestandteil dieser Komponenten sein.

Ein Innenraum-Lichtmodul umfasst beispielsweise eine Vielzahl von, insbesondere verschiedenfarbigen, LEDs und/oder eine Vielzahl von RGB-LEDs. Vorzugsweise ist jeweils ein Innenraum-Lichtmodul datentechnisch und gegebenenfalls auch energietechnisch mit einem Peripherie-Lichtsteuergerät gekoppelt. Besonders bevorzugt ist vorgesehen, dass ein Innenraum-Lichtmodul eine Vielzahl von nebeneinander angeordneten Lichtquellen oder Lichtquellen-Gruppen umfasst, die zeitlich versetzt zueinander einschaltbar oder aktivierbar sind und vorzugsweise zeitlich versetzt zueinander entsprechend ausschaltbar oder deaktivierbar sind, so dass für einen Betrachter der Eindruck eines Lauflichtes entsteht, bei dem beispielsweise bezogen auf ein Lichtmodul in der Wahrnehmung eines Betrachters der Ort maximaler optischer Strahlungsleistung diskret oder kontinuierlich in Richtung der maximalen länglichen Erstreckung des Lichtmoduls beliebig bewegt wird. Vorzugsweise sind hierzu die Lichtquellen eines Innenraum-Lichtmoduls sequentiell und zyklisch aktivierbar und/oder deaktivierbar. Die zeitlich versetzte Aktivierung nebeneinander angeordneter Lichtquellen kann auch zeitlich überlappend erfolgen.

Eine Lauflichtkennung kann beispielsweise folgende Parameter explizit oder implizit definieren: An- und Ausschaltzeit für das Lauflicht, Laufrichtung, Laufdauer, Anschaltverzögerungsdauer, mit Lauflicht beginnende Lichtquelle, Lauflicht beendende Lichtquelle, Leuchtintensität und/oder Lauflichtgeschwindigkeit. Je nach Ausführungsvariante kann eine Lauflichtkennung mehr oder weniger Lauflichtparameter explizit enthalten.

Gemäß einer bevorzugten Ausführungsform der Erfindung ist vorgesehen, dass die Peripherie-Lichtsteuergeräte auf der gleichen Zeitbasis beruhen, dass sich die Peripherie-Lichtsteuergeräte insbesondere eine gemeinsame Zeitbasis teilen und/oder die Peripherie-Lichtsteuergeräte miteinander synchronisiert sind.

Die Peripherie-Lichtsteuergeräte umfassen gemäß einer bevorzugten Ausführungsform jeweils einen Datenspeicher, in dem den Lichteffekt-Kennungen jeweils ein Lichteffekt-Parametersatz zugeordnet abgespeichert ist. In Reaktion auf den Empfang einer Lichteffekt-Kennung von dem Zentral-Lichtsteuergerät durch ein Peripherie-Lichtsteuergerät wird vorzugsweise der dieser Lichteffekt-Kennung zugeordnete Lichteffekt-Parametersatz von dem Peripherie-Lichtsteuergerät herangezogen, um das zugehörige Lichtmodul und die darin enthaltenen Lichtquellen so anzusteuern, dass der gewünschte Kraftfahrzeuginnenraum-Lichteffekt, insbesondere das gewünschte Lauflicht, erzeugt wird. Dadurch lassen auf einfache Weise beliebige Lauflichter schaffen.

Durch die Aufteilung der Steuerungsfunktion auf ein Zentral-Lichtsteuergerät und eine Vielzahl von Peripherie-Lichtsteuergeräten und vorzugsweise eine dezentrale Hinterlegung von Lichteffekt-Parametersätzen in den Peripherie-Lichtsteuergeräten wird ermöglicht, dass aufwändige Kraftfahrzeuginnenraum-Lichteffekte, wie ein weite Teile des Kraftfahrzeug-Innenraums betreffendes Lauflicht, ohne Überlastung oder ohne übermäßige Belastung der typischerweise in Kraftfahrzeugen eingesetzten Datenbustechnologien realisiert werden können, ohne auf die zentrale Steuerung zu verzichten. Anstelle der Übertragung einer Vielzahl von umfangreichen Lichteffekt-Parametersätzen ist hierzu lediglich die Übertragung identischer oder verschiedener vorgegebener Lichteffekt-Kennungen, beispielsweise einer LauflichtKennung, von dem Zentral-Lichtsteuergerät an Peripherie-Lichtsteuergeräte erforderlich.

Gemäß einer bevorzugten Ausführungsform umfasst ein Lichteffekt-Parametersatz beispielsweise Steuerinformationen für mindestens ein Innenraum-Lichtmodul, durch welche beispielsweise definiert ist, welche Lichtquelle bzw. welche Lichtquellen des Innenraum-Lichtmoduls wann, bis wann, wie lange, mit welcher Farbe, mit welcher Intensität und/oder mit welchem Intensitätsverlauf aktiviert, d.h. zum Leuchten gebracht, wird bzw. werden.

Vorzugsweise ist das Zentral-Lichtsteuergerät derart eingerichtet, dass zur Auslösung eines Kraftfahrzeuginnenraum-Lichteffekts verschiedene oder identische Lichteffekt-Kennungen an verschiedene Peripherie-Lichtsteuergeräte übertragen werden. In verschiedenen Peripherie-Lichtsteuergeräten können gleichen Lichteffekt-Kennungen verschiedene oder identische Lichteffekt-Parametersätze zugeordnet sein.

Es ist eine Weiterbildung der Erfindung, dass ein erstes Innenraum-Lichtmodul und/oder ein zugeordnetes erstes Peripherie-Lichtsteuergerät in einer Fahrertüre des Kraftfahrzeuges angeordnet sind, dass ein zweites Innenraum-Lichtmodul und/oder ein zugeordnetes zweites Peripherie-Lichtsteuergerät in, unter oder bei einer Instrumententafel des Kraftfahrzeuges angeordnet sind, und dass ein drittes Innenraum-Lichtmodul und ein zugeordnetes drittes Peripherie-Lichtsteuergerät in einer Beifahrertüre des Kraftfahrzeuges angeordnet sind.

Vorzugsweise wird das Lauflicht mittels zumindest des ersten, zweiten und dritten Innenraum-Lichtmoduls erzeugt. Dadurch wird erreicht, dass ein Lauflicht erzeugt wird, das sich auf einen großen Teil des Kraftfahrzeuginnenraums bezieht, oder das einen großen Teil des Kraftfahrzeuginnenraums betrifft, und das durch eine zentrale Ansteuerung ausgelöst wird. Das Lauflicht kann dabei aus einzelnen Lauflichtern, aufgebaut sein, die jeweils durch die einzelnen Innenraum-Lichtmodule erzeugt werden, wobei die Ansteuerung der einzelnen Innenraum-Lichtmodule aufeinander abgestimmt sein kann, so dass sich insgesamt ein über die einzelnen Innenraum-Lichtmodule jeweils hinausgehendes Lauflicht ergibt.

Es ist eine Weiterbildung der Erfindung, dass das Gefahrensignal eine Ortsinformation (Ort einer Gefahrenquelle relativ zum Fahrzeug, Richtung zu einer Gefahrenquelle ausgehend vom Fahrzeug) enthält, durch die vorzugsweise der Ort der Gefahr relativ zum Kraftfahrzeug bestimmt oder beschrieben wird, und bei dem das Lauflicht in Reaktion auf die Ortsinformation ausgeführt wird, insbesondere derart, dass durch das Lauflicht auf den Ort der Gefahr hingewiesen wird.

Dadurch wird erreicht, dass ein Fahrer durch das Lauflicht nicht nur auffällig auf eine mögliche Gefahr hingewiesen wird, sondern sogar noch auf den Ort der Gefahrenquelle hingewiesen wird.

Es ist eine Weiterbildung der Erfindung, dass das Lauflicht in Reaktion auf die Ortsinformation derart ausgeführt wird, dass das von den einzelnen Lichtmodulen erzeugte Lauflicht auf den Ort der Gefahrenquelle zuläuft, zumindest eher auf den Ort der Gefahrenquelle zuläuft als von dem Ort der Gefahrenquelle wegläuft. Vorzugsweise werden durch die beteiligten Innenraum-Lichtmodule zwei Lauflichter erzeugt, die aufeinander zulaufen, wobei der Ort, an dem die beiden Lauflichter aufeinander zulaufen der Ort der Innenraum-Lichtmodule ist, der der Gefahrenquelle am nächsten ist, oder der im Wesentlichen den Schnittpunkt bildet einer Geraden vom Fahrer zur Gefahrenquelle mit den Innenraum-Lichtmodulen.

Es ist eine Weiterbildung der Erfindung, dass das Aufmerksamkeitslicht und das Lauflicht durch die Lichteffekt-Kennung bestimmt sind.

Dabei wird vorzugsweise das Aufmerksamkeitslicht dadurch erzeugt, dass ein oder die Innenraum-Lichtmodule Licht in einer vorgegebenen einheitlichen Lichtfarbe erzeugen, wobei vorzugsweise die durch das oder die Innenraum-Lichtmodule erzeugte Strahlungsleistung höher ist als die während eines Lauflichtes durch das oder die Innenraum-Lichtmodule erzeugte Strahlungsleistung.

Dadurch wird ein Fahrer durch ein noch auffälligeres Vorsignal auf das folgende auffällige Lauflicht aufmerksam gemacht.

Vorzugsweise ist vorgesehen, dass mindestens ein Innenraum-Lichtmodul mit einem Lichtleiter oder einer Streuscheibe optisch gekoppelt ist, insbesondere zur optischen Beeinflussung des durch das Innenraum-Lichtmodul erzeugten Lichts. Durch diese Weiterbildungen wird auf einfache Weise die Vielfalt möglicher Innenraum-Lichteffekte erhöht.

Im Folgenden wird die Erfindung anhand von Beispielen unter Bezugnahme auf die folgenden Figuren näher erläutert:
- Figur 1: zeigt eine vereinfachte schematische Prinzipdarstellung einer Innenraumbeleuchtung eines Kraftfahrzeuges von oben;
- Figur 2: zeigt eine vereinfachte schematische Prinzipdarstellung einer Innenraumbeleuchtung eines Kraftfahrzeuges zur Erzeugung eines Lauflichts von oben.

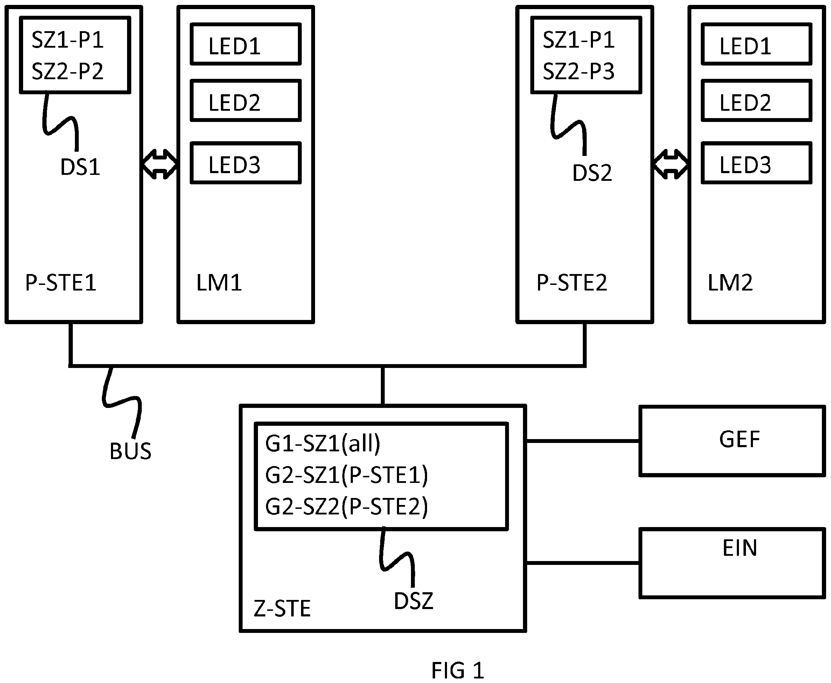

Die Innenraumbeleuchtung eines Kraftfahrzeuges aus Figur 1 offenbart ein hardwaretechnisch an sich bekanntes Zentral-Lichtsteuergerät Z-STE und zwei, im Kraftfahrzeug verteilte Peripherie-Lichtsteuergeräte P-STE1,P-STE2, die in hardwaretechnischer Sicht ebenfalls an sich bekannt aufgebaut sein können.

Zudem sind zwei Innenraum-Lichtmodule LM1, LM2 vorgesehen, die jeweils eine Vielzahl von LED-basierten Lichtquellen LED1, LED2, LED3 umfassen, und die jeweils einem Peripherie-Lichtsteuergerät P-STE1, P-STE2 zugeordnet sind und mit diesem datentechnisch gekoppelt sind. Die LED-basierten Lichtquellen LED1, LED2, LED3 können eine Vielzahl einzelner, verschiedenfarbiger LEDs und/oder eine Vielzahl von RGB-LEDs umfassen.

Die Innenraum-Lichtmodule LM1, LM2 sind beispielsweise in die Innenverkleidung der linken bzw. rechten Fahrertüre eingefügt. Das Licht der Lichtquellen LED1, LED2, LED3 wird dabei in einen Lichtleiter (nicht dargestellt) eingekoppelt, durch den Lichtleiter geführt und an gewünschten Bereichen wieder ausgekoppelt. Alternativ dazu durchstrahlt das Licht der nebeneinander angeordneten Lichtquellen LED1, LED2, LED3 eine Streuscheibe oder eine streuscheibenähnliche Komponente.

Durch einen an sich bekannten Kraftfahrzeug-Datenbus BUS, wie beispielsweise einen LIN-Bus, sind das Zentral-Lichtsteuergerät Z-STE und die Peripherie-Lichtsteuergeräte P-STE1, P-STE2 datentechnisch miteinander verbunden.

Die Peripherie-Lichtsteuergeräte P-STE1, P-STE2 umfassen jeweils einen Datenspeicher DS1, DS2, in dem Lichteffekt-Parametersätze P1, P2, P3 abgespeichert sind, denen jeweils eine Lichteffekt-Kennung SZ1, SZ2 zugeordnet ist. Ein typischer Lichteffekt-Parametersatz P1, P2, P3 enthält beispielsweise Informationen über Lichtfarbe, Leuchtdauer, Lichtintensität, Verzögerungszeit, Aktivierungszeitpunkt, Deaktivierungszeitpunkt und/oder Lichtintensitätsverlauf jeweils für die einzelnen Lichtquellen LED1, LED2, LED3 zumindest eines Innenraum-Lichtmoduls LM1, LM2.

Das Zentral-Lichtsteuergerät Z-STE ist nun, insbesondere programmtechnisch, derart eingerichtet, dass abhängig von einem aktuell vorliegenden, insbesondere erfassten, Gefahrensignal G1,G2 über den Kraftfahrzeug-Datenbus BUS, beruhend auf an sich bekannten Übertragungs- und Adressierungsverfahren, Lichteffekt-Kennungen SZ1,SZ2 an die Peripherie-Lichtsteuergeräte P-STE1, P-STE2 übertragen werden.

Das Gefahrensignal G1,G2 wird ausgegeben von einer an sich bekannten Gefahrenerkennungseinrichtung GEF in Reaktion auf die Erkennung einer Gefahr, wobei die Gefahrenerkennungseinrichtung GEF derart mit dem Zentral-Lichtsteuergerät Z-STE gekoppelt ist und das Zentral-Lichtsteuergerät Z-STE derart eingerichtet ist, dass in Reaktion auf ein ausgegebenes Gefahrensignal G1,G2 durch das Zentral-Lichtsteuergerät Z-STE die zugeordnete(n) vorgegebene(n) Lichteffekt-Kennung(en), insbesondere zur Auslösung eines Lauflichtes, an die Peripherie-Lichtsteuergeräte übertragen wird/werden.

Bei der Gefahrenerkennungseinrichtung GEF kann es sich um ein rechnergestütztes Kamerasystem und/oder ein an sich bekanntes, sensorgestütztes oder kameragestütztes Kraftfahrzeugassistenzsystem handeln, durch die beispielsweise beim Erkennen eines Hindernisses oder eines möglichen Kollisionsobjektes ein Gefahrensignal ausgegeben wird.

In dem Zentral-Lichtsteuergerät Z-STE sind verschiedenen Gefahrensignalen G1, G2 verschiedene Lichteffekt-Kennungen SZ1, SZ2 oder Gruppen von Lichteffekt-Kennungen zugeordnet, so dass automatisch, abhängig von einem empfangenen Gefahrensignal G1,G2 eine Lichteffekt-Kennung oder Gruppen von Lichteffekt-Kennungen an Peripherie-Lichtsteuergeräte übertragen werden. Dazu sind in dem Zentral-Lichtsteuergerät Z-STE, beispielsweise in einem Datenspeicher, Informationen über Zuordnungen von Lichteffekt-Kennungen SZ1, SZ2 zu Gefahrensignalen G1, G2 abgelegt.

Nach dem Empfang der an sie P-STE1, P-STE2 jeweils adressierten Lichteffekt-Kennungen SZ1, SZ2 werden diese Lichteffekt-Kennungen SZ1, SZ2 durch die Peripherie-Lichtsteuergeräte P-STE1, P-STE2 jeweils auf die zugehörigen Lichteffekt-Parametersätze P1, P2 abgebildet. Diese zugehörigen Parametersätze P1, P2 werden dann durch das Peripherie-Lichtsteuergerät P-STE1, P-STE2 zur Ansteuerung der betroffenen Lichtquellen LED1, LED2, LED3 des betroffenen Innenraum-Lichtmoduls LM1, LM2 derart verwendet, dass die einzelnen Lichtquellen LED1, LED2, LED3 entsprechend den in den Lichteffekt-Parametersätzen P1, P2, P3 beschriebenen Informationen zur Erzeugung von Licht angesteuert werden. Dazu können die Peripherie-Lichtsteuergeräte P-STE1, P-STE2 beispielsweise auch an sich bekannte Pulsweitenmodulationstreiber umfassen.

Aus Vereinfachungsgründen wird auf die an sich bekannte energietechnische Versorgung der einzelnen Komponenten der Innenraumbeleuchtung nicht näher eingegangen.

Im Folgenden wird anhand eines Beispiels eine Zuordnung von Gefahrensignalen G1,G2 zu Lichteffekt-Kennungen SZ1,SZ2 und von Lichteffekt-Kennungen SZ1,SZ2 zu Lichteffekt-Parametersätzen P1, P2 und deren Anwendung erläutert.

In einem Datenspeicher DSZ des Zentral-Lichtsteuergerätes Z-STE sind verschiedenen Gefahrensignalen G1,G2 verschiedene Lichteffekt-Kennungen SZ1,SZ2 zugeordnet:
G1-SZ1,
G2-SZ1,
G2-SZ2.

Diese Zuordnungen gelten dabei beispielsweise für alle Peripherie-Lichtsteuergeräte (G1-SZ1 (all)) oder nur für bestimmte Peripherie-Lichtsteuergeräte (G1-SZ1(P-STE1); G1-SZ2(P-STE2)).

Wird beispielsweise ein Gefahrensignal G1 erkannt, so wird die Lichteffekt-Kennung SZ1 an alle (all) Peripherie-Lichtsteuergeräte übermittelt.

Wird dagegen beispielsweise ein Gefahrensignal G2 erkannt, so wird die Lichteffekt-Kennung SZ1 an ein erstes Peripherie-Lichtsteuergerät P-STE1 übermittelt, insbesondere adressiert, und die Lichteffekt-Kennung SZ2 an ein zweites Peripherie-Lichtsteuergerät P-STE2 übermittelt.

Der Empfang und die Verarbeitung einer ersten Lichteffekt-Kennung SZ1 bewirkt in dem ersten Peripherie-Lichtsteuergerät P-STE1 bzw. in dem zweiten Peripherie-Lichtsteuergerät P-STE2 eine Ansteuerung des Lichtmoduls LM1 bzw. des Lichtmoduls LM2 gemäß dem Lichteffekt-Parametersatz P1 (SZ1-P1).

Dagegen bewirkt der Empfang und die Verarbeitung einer zweiten Lichteffekt-Kennung SZ2 in dem ersten Peripherie-Lichtsteuergerät P-STE1 eine Ansteuerung des ersten Lichtmoduls LM1 gemäß dem Lichteffekt-Parametersatz P2 (SZ2-P2), und in dem zweiten Peripherie-Lichtsteuergerät P-STE2 eine Ansteuerung des zweiten Lichtmoduls LM2 gemäß dem Lichteffekt-Parametersatz P3 (SZ2-P3).

Dadurch können mit einem einfachen, bewährten und an sich bekannten Datenbus aufwändige statische und/oder dynamische Lichteffekte realisiert werden, die den gesamten Kraftfahrzeuginnenraum betreffen.

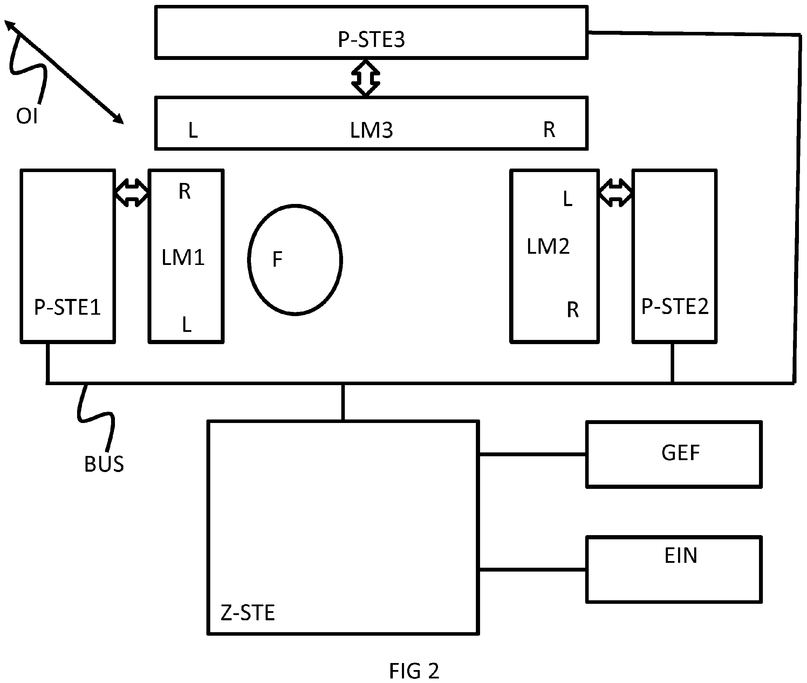

Im Folgenden wird anhand von Figur 2 die Erzeugung eines Lauflichts beschrieben. Dabei wird davon ausgegangen, dass in der Verkleidung der linken vorderen Türe sichtbar ein erstes Innenraum-Lichtmodul LM1 und verdeckt durch die Verkleidung ein erstes Peripherie-Lichtsteuergerät P-STE1 angeordnet ist.

In die Instrumententafel ist sichtbar ein zweites Innenraum-Lichtmodul LM2 eingefügt, und verdeckt durch die Instrumententafel ein zweites Peripherie-Lichtsteuergerät P-STE2 untergebracht.

In der Verkleidung der rechten vorderen Türe ist sichtbar ein drittes Innenraum-Lichtmodul LM3, und verdeckt durch die Verkleidung ein drittes Peripherie-Lichtsteuergerät P-STE3 angeordnet.

Die Innenraum-Lichtmodule LM1, LM2, LM3 sind jeweils als Lauflichtmodule ausgeführt, bei denen jeweils nebeneinander angeordnete Lichtquellen, vorzugsweise zyklisch, zeitlich nacheinander aktiviert und/oder deaktiviert werden, so dass bei einem Betrachter der Eindruck eines Lauflichtes hervorgerufen wird. Alternativ dazu kann ein Lauflicht auch mit einem Lichtleiterbündel erzeugt werden, bei dem in die Lichtleiter nacheinander Lichtimpulse eingekoppelt werden, und die Lichtleiter örtlich versetzt zueinander Auskoppelabschnitte aufweisen.

Es wird nun, beispielsweise ausgelöst durch den Empfang eines bestimmten Gefahrensignals, die zugehörige Lichteffekt-Kennung (Lauflicht-Lichteffekt-Kennung) an die drei Peripherie-Lichtsteuergeräte P-STE1, P-STE2, P-STE-3 gesendet.

Der dieser Lauflicht-Lichteffekt-Kennung zugeordnete Lichteffekt-Parametersatz bewirkt in dem ersten Peripherie-Lichtsteuergerät P-STE1 die Auslösung eines Lauflichtes im ersten Lichtmodul LM1 von links nach rechts mit einer Startverzögerung von 0ms und einer Gesamtlichtlaufzeit von 500ms (die Lichtquellen des ersten Lichtmodules LM1 erzeugen 500ms lang ein Lauflicht, d.h. die Lichtquellen des Lichtmodules werden 500ms lang entsprechend ihrer örtlichen Reihenfolge nacheinander zeitlich versetzt aktiviert und ggf. wieder deaktiviert (vorzugsweise nur ein Zyklus)). Beispielsweise wird eine erste LED von insgesamt fünf LEDs die ersten 100 ms aktiviert, dann deaktiviert, die zweite (benachbarte) LED die zweiten 100 ms aktiviert, dann deaktiviert, usw..

Der der Lauflicht-Lichteffekt-Kennung in dem dritten Peripherie-Lichtsteuergerät P-STE3 zugeordnete Lichteffekt-Parametersatz bewirkt in dem zweiten Peripherie-Lichtsteuergerät die Auslösung eines Lauflichtes im dritten Lichtmodul LM3 von links nach rechts mit einer Startverzögerung von 500ms und einer Gesamtlichtlaufzeit von 800ms (die Lichtquellen des dritten Lichtmodules LM3 erzeugen 800ms lang ein Lauflicht).

Der der Lauflicht-Lichteffekt-Kennung in dem zweiten Peripherie-Lichtsteuergerät P-STE2 zugeordnete Lichteffekt-Parametersatz bewirkt in dem dritten Peripherie-Lichtsteuergerät die Auslösung eines Lauflichtes im zweiten Lichtmodul LM2 von links nach rechts mit einer Startverzögerung von 1300ms und einer Gesamtlichtlaufzeit von 500ms (die Lichtquellen des zweiten Lichtmodules LM2 erzeugen 500ms lang ein Lauflicht).

Bei einer alternativen Ausführungsvariante enthält das Gefahrensignal G1 eine Ortsinformation (hier symbolisiert durch den Doppelpfeil OI), die angibt aus welcher Richtung die Gefahrenquelle kommt, oder in welcher Richtung die Gefahrenquelle sichtbar ist. Wieder wird eine zugehörige Lichteffekt-Kennung SZ1 (in diesem Ausführungsbeispiel eine Lauflicht-Lichteffekt-Kennung mit Ortsinformation) an die drei Peripherie-Lichtsteuergeräte P-STE1, P-STE2, P-STE-3 gesendet.

Der dieser Lauflicht-Lichteffekt-Kennung mit Ortsinformation SZ1 zugeordnete Lichteffekt-Parametersatz bewirkt in dem ersten Peripherie-Lichtsteuergerät P-STE1 die Auslösung eines Lauflichtes im ersten Lichtmodul LM1 von links L nach rechts R (aus Sicht des Fahrers F) mit einer Startverzögerung von 500 ms und einer Gesamtlichtlaufzeit von 500ms (die Lichtquellen des ersten Lichtmodules LM1 erzeugen nach einer Verzögerung von 500ms 500ms lang ein Lauflicht, d.h. die Lichtquellen des Lichtmodules werden 500ms lang entsprechend ihrer örtlichen Reihenfolge nacheinander zeitlich versetzt aktiviert und ggf. wieder deaktiviert (vorzugsweise nur ein Zyklus)).

Der der Lauflicht-Lichteffekt-Kennung in dem zweiten Peripherie-Lichtsteuergerät P-STE2 zugeordnete Lichteffekt-Parametersatz bewirkt in dem zweiten Peripherie-Lichtsteuergerät die Auslösung eines Lauflichtes im zweiten Lichtmodul LM2 von rechts R nach links L mit einer Startverzögerung von 0ms und einer Gesamtlichtlaufzeit von 500ms (die Lichtquellen des zweiten Lichtmodules LM2 erzeugen 500ms lang ein Lauflicht).

Der der Lauflicht-Lichteffekt-Kennung in dem dritten Peripherie-Lichtsteuergerät P-STE3 zugeordnete Lichteffekt-Parametersatz bewirkt in dem dritten Peripherie-Lichtsteuergerät die Auslösung eines Lauflichtes im dritten Lichtmodul LM3 von rechts R nach links L mit einer Startverzögerung von 500ms und einer Gesamtlichtlaufzeit von 500ms (die Lichtquellen des dritten Lichtmodules LM3 erzeugen 500ms lang ein Lauflicht). Dadurch werden insgesamt zwei Lauflichter erzeugt, ein erstes durch das erste Lichtmodul LM1 ein zweites durch das zweite und dritte Lichtmodul LM2,LM3, die an einer Stelle aufeinander zulaufen, die einen Fahrer F auf den Ort der Gefahrenquelle hinweist.

Eine weitere Ausführungsform sieht vor, dass ausgelöst durch das Gefahrensignal G1 und die zugehörige Lichteffekt-Kennung vor der Erzeugung des Lauflichtes ein Aufmerksamkeits-Blitz durch die Lichtmodule LM1,LM2,LM3 erzeugt wird. Dabei werden zunächst alle LEDs aller Lichtmodule LM1,LM2,LM3 gleichzeitig, vorzugsweise mit maximaler Helligkeit, für 20 ms aktiviert und dann wieder deaktiviert. Erst nach einer Pause von 10 ms wird das oben mehrfach beschriebene Lauflicht erzeugt.

## Patentansprüche

1. Kraftfahrzeug
- mit einem Zentral-Lichtsteuergerät (Z-STE),
- mit einer Vielzahl von im Kraftfahrzeug verteilten Peripherie-Lichtsteuergeräten (P-STE1, P-STE2, P-STE3),
- mit einer Vielzahl von Innenraum-Lichtmodulen (LM1, LM2, LM3), die jeweils eine Vielzahl von Lichtquellen (LED1, LED2, LED3) umfassen, und die jeweils einem Peripherie-Lichtsteuergerät (P-STE1, P-STE2, P-STE3) zugeordnet sind,
- mit einem Datenbus (BUS), über den das Zentral-Lichtsteuergerät (Z-STE) und die Peripherie-Lichtsteuergeräte (P-STE1, P-STE2, P-STE3) miteinander gekoppelt sind,
- bei dem das Zentral-Lichtsteuergerät (Z-STE) eingerichtet ist, zur Auslösung von Kraftfahrzeuginnenraum-Lichteffekten Signale an Peripherie-Lichtsteuergeräte (P-STE1, P-STE2, P-STE3) zu übertragen, und
- bei dem in Reaktion auf den Empfang der Signale durch die Peripherie-Lichtsteuergeräte (P-STE1, P-STE2, P-STE3) durch die den Peripherie-Lichtsteuergeräten (P-STE1, P-STE2, P-STE3) zugeordneten Innenraum-Lichtmodule (LM1, LM2, LM3) ein Lauflicht erzeugt wird, und
- die Vielzahl von Innenraum-Lichtmodulen (LM1, LM2,LM3) jeweils eine Vielzahl von nebeneinander angeordneten Lichtquellen (LED1, LED2, LED3) umfasst,
- die Signale Lichteffekt-Kennungen (SZ1,SZ2) sind, wobei das Lauflicht durch die Lichteffekt-Kennungen (SZ1,SZ2) bestimmt ist,
**dadurch gekennzeichnet, dass**
- eine Gefahrenerkennungseinrichtung (GEF) zur Ausgabe eines Gefahrensignals in Reaktion auf die Erkennung einer Gefahr vorgesehen ist, wobei die Gefahrenerkennungseinrichtung (GEF) derart mit dem Zentral-Lichtsteuergerät (Z-STE) gekoppelt ist, und das Zentral-Lichtsteuergerät (Z-STE) derart eingerichtet ist, dass in Reaktion auf ein ausgegebenes Gefahrensignal durch das Zentral-Lichtsteuergerät (Z-STE) Lichteffekt-Kennungen (SZ1,SZ2) zur Auslösung des Lauflichtes an die Peripherie-Lichtsteuergeräte (P-STE1, P-STE2, P-STE3) übertragen werden, und
- bei dem in Reaktion auf den Empfang der Lichteffekt-Kennungen durch die Peripherie-Lichtsteuergeräte (P-STE1, P-STE2, P-STE3) durch die den Peripherie-Lichtsteuergeräten (P-STE1, P-STE2, P-STE3) zugeordneten Innenraum-Lichtmodule (LM1, LM2, LM3) zuerst ein Aufmerksamkeitslicht erzeugt wird, dann das oder die Innenraum-Lichtmodule (LM1, LM2, LM3) abgedimmt werden und dann ein Lauflicht erzeugt wird.

2. Kraftfahrzeug nach Anspruch 1,
- bei dem ein erstes Innenraum-Lichtmodul (LM1), und vorzugsweise ein zugeordnetes erstes Peripherie-Lichtsteuergerät (P-STE1), in einer Fahrertüre des Kraftfahrzeuges angeordnet sind,
- bei dem ein zweites Innenraum-Lichtmodul (LM2), und vorzugsweise ein zugeordnetes zweites Peripherie-Lichtsteuergerät (P-STE2), in, unter oder bei einer Instrumententafel des Kraftfahrzeuges angeordnet sind, und
- bei dem ein drittes Innenraum-Lichtmodul (LM3), und vorzugsweise ein zugeordnetes drittes Peripherie-Lichtsteuergerät (P-STE3), in einer Beifahrertüre des Kraftfahrzeuges angeordnet sind.

3. Kraftfahrzeug nach einem der vorhergehenden Ansprüche,
bei dem das Gefahrensignal eine Ortsinformation enthält, und bei dem das Lauflicht in Reaktion auf die Ortsinformation ausgeführt wird.

4. Kraftfahrzeug nach dem Anspruch 3,
bei dem das Lauflicht in Reaktion auf die Ortsinformation derart ausgeführt wird, dass das von den einzelnen Lichtmodulen erzeugte Lauflicht auf den Ort der Gefahrenquelle zuläuft.

5. Kraftfahrzeug nach einem der vorhergehenden Ansprüche,
bei dem das Aufmerksamkeitslicht und das Lauflicht durch die Lichteffekt-Kennungen bestimmt sind.

6. Kraftfahrzeug nach einem der vorhergehenden Ansprüche,
bei dem das Aufmerksamkeitslicht dadurch erzeugt wird, dass ein oder die Innenraum-Lichtmodule (LM1, LM2, LM3) Licht in einer vorgegebenen einheitlichen Lichtfarbe erzeugen, wobei vorzugsweise die durch das oder die Innenraum-Lichtmodule (LM1, LM2, LM3) erzeugte Strahlungsleistung höher ist als die während eines Lauflichtes durch das oder die Innenraum-Lichtmodule (LM1, LM2, LM3) erzeugte Strahlungsleistung.

## Claims

1. Motor vehicle
- comprising a central light control unit (Z-STE),
- comprising a multiplicity of peripheral light control units (P-STE1, P-STE2, P-STE3) distributed in the motor vehicle,
- comprising a multiplicity of interior light modules (LM1, LM2, LM3), each of which comprises a multiplicity of light sources (LED1, LED2, LED3) and is respectively assigned to a peripheral light control unit (P-STE1, P-STE2, P-STE3),
- comprising a data bus (BUS), via which the central light control unit (Z-STE) and the peripheral light control units (P-STE1, P-STE2, P-STE3) are coupled to one another,
- wherein the central light control unit (Z-STE) is configured to transmit signals to peripheral light control units (P-STE1, P-STE2, P-STE3) for the purpose of initiating motor vehicle interior light effects, and
- wherein, in reaction to the reception of the signals by the peripheral light control units (P-STE1, P-STE2, P-STE3), the interior light modules (LM1, LM2, LM3) assigned to the peripheral light control units (P-STE1, P-STE2, P-STE3) generate a moving light, and
- the multiplicity of interior light modules (LM1, LM2, LM3) each comprise a multiplicity of light sources (LED1, LED2, LED3) arranged next to one another,
- the signals are light effect identifiers (SZ1, SZ2), the moving light being determined by the light effect identifiers (SZ1, SZ2),
**characterized in that**
- a hazard identification device (GEF) for outputting a hazard signal in reaction to the identification of a hazard is provided, wherein the hazard identification device (GEF) is coupled to the central light control unit (Z-STE) in such a way, and the central light control unit (Z-STE) is configured in such a way, that in reaction to a hazard signal that has been output, the central light control unit (Z-STE) transmits light effect identifiers (SZ1, SZ2) for initiating a moving light to the peripheral light control units (P-STE1, P-STE2, P-STE3), and
- wherein in reaction to the reception of the light effect identifiers by the peripheral light control units (P-STE1, P-STE2, P-STE3), the interior light modules (LM1, LM2, LM3) assigned to the peripheral light control units (P-STE1, P-STE2, P-STE3) firstly generate an attention light, then dim the interior light module(s) (LM1, LM2, LM3) and then generate a moving light.

2. Motor vehicle according to Claim 1,
- wherein a first interior light module (LM1), and preferably an assigned first peripheral light control unit (P-STE1), are arranged in a driver's door of the motor vehicle,
- wherein a second interior light module (LM2), and preferably an assigned second peripheral light control unit (P-STE2), are arranged in, below or at an instrument panel of the motor vehicle, and
- wherein a third interior light module (LM3), and preferably an assigned third peripheral light control unit (P-STE3), are arranged in a passenger door of the motor vehicle.

3. Motor vehicle according to either one of the preceding claims,
wherein the hazard signal contains location information, and wherein the moving light is implemented in reaction to the location information.

4. Motor vehicle according to Claim 3,
wherein the moving light is implemented in reaction to the location information in such a way that the moving light generated by the individual light modules moves toward the location of the hazard source.

5. Motor vehicle according to any one of the preceding claims,
wherein the attention light and the moving light are determined by the light effect identifiers.

6. Motor vehicle according to any one of the preceding claims,
wherein the attention light is generated by one or the interior light module(s) (LM1, LM2, LM3) generating light in a predefined uniform light colour, wherein preferably the radiation power generated by the interior light module (s) (LM1, LM2, LM3) is higher than the radiation power generated by the interior light module(s) (LM1, LM2, LM3) during a moving light.

## Revendications

1. Véhicule automobile, comprenant
- un appareil de commande d'éclairage central (Z-STE),
- une pluralité d'appareils de commande d'éclairage périphérique, répartis dans le véhicule automobile (P-STE1, P-STE2, P-STE3),
- une pluralité de modules d'éclairage d'habitacle (LM1, LM2, LM3) qui comprennent respectivement une pluralité de sources de lumière (LED1, LED2, LED3), et qui sont associés à un appareil de commande d'éclairage périphérique (P-STE1, P-STE2, P-STE3) respectivement,
- un bus de données (BUS) par lequel l'appareil de commande d'éclairage central (Z-STE) et les appareils de commande d'éclairage périphérique (P-STE1, P-STE2, P-STE3) sont couplés les uns aux autres,
- dans lequel l'appareil de commande d'éclairage central (Z-STE) est conçu pour transmettre des signaux à des appareils de commande d'éclairage périphérique (P-STE1, P-STE2, P-STE3) en vue de déclencher des effets de lumière d'habitacle de véhicule automobile, et
- dans lequel, en réaction à la réception des signaux par les appareils de commande d'éclairage périphérique (P-STE1, P-STE2, P-STE3), les modules d'éclairage d'habitacle (LM1, LM2, LM3) associés aux appareils de commande d'éclairage périphérique (P-STE1, P-STE2, P-STE3) génèrent un chenillard, et
- la pluralité de modules d'éclairage d'habitacle (LM1, LM2, LM3) comprend respectivement une pluralité de sources de lumière (LED1, LED2, LED3) disposées côte à côte,
- les signaux sont des identifiants d'effet de lumière (SZ1, SZ2), le chenillard étant déterminé par les identifiants d'effet de lumière (SZ1, SZ2), **caractérisé en ce que**
- un dispositif d'identification de danger (GEF) est prévu pour émettre un signal de danger en réaction à l'identification d'un danger, le dispositif d'identification de danger (GEF) étant couplé à l'appareil de commande d'éclairage central (Z-STE), et l'appareil de commande d'éclairage central (Z-STE) est conçu de telle sorte qu'en réaction à un signal de danger émis, l'appareil de commande d'éclairage central (Z-STE) transmet des identifiants d'effet de lumière (SZ1, SZ2) aux appareils de commande d'éclairage périphérique (P-STE1, P-STE2, P-STE3) en vue du déclenchement du chenillard, et
- dans lequel, en réaction à la réception des identifiants d'effet de lumière par les appareils de commande d'éclairage périphérique (P-STE1, P-STE2, P-STE3), les modules d'éclairage d'habitacle (LM1, LM2, LM3) associés aux appareils de commande d'éclairage périphérique (P-STE1, P-STE2, P-STE3) génèrent d'abord un éclairage de vigilance, ensuite le(s) module(s) d'éclairage d'habitacle (LM1, LM2, LM3) est/sont atténué(s), et ensuite un chenillard est généré.

2. Véhicule automobile selon la revendication 1,
- dans lequel un premier module d'éclairage d'habitacle (LM1), et de préférence un premier appareil de commande d'éclairage périphérique (P-STE1) associé, sont disposés dans une porte côté conducteur du véhicule automobile,
- dans lequel un deuxième module d'éclairage d'habitacle (LM2), et de préférence un deuxième appareil de commande d'éclairage périphérique (P-STE2) associé, sont disposés dans, sous ou à proximité d'un tableau de bord du véhicule automobile, et
- dans lequel un troisième module d'éclairage d'habitacle (LM3), et de préférence un troisième appareil de commande d'éclairage périphérique (P-STE3) associé, sont disposés dans une porte côté passager du véhicule automobile.

3. Véhicule automobile selon l'une quelconque des revendications précédentes, dans lequel le signal de danger contient une information de lieu, et dans lequel le chenillard est exécuté en réaction à l'information de lieu.

4. Véhicule automobile selon la revendication 3, dans lequel le chenillard est exécuté en réaction à l'information de lieu de telle sorte que le chenillard généré par les modules d'éclairage individuels se dirige vers le lieu de la source de danger.

5. Véhicule automobile selon l'une quelconque des revendications précédentes, dans lequel l'éclairage de vigilance et le chenillard sont déterminés par les identifiants d'effet de lumière.

6. Véhicule automobile selon l'une quelconque des revendications précédentes, dans lequel l'éclairage de vigilance est généré en ce qu'un ou les modules d'éclairage d'habitacle (LM1, LM2, LM3) génèrent un éclairage d'une couleur de lumière homogène prédéfinie, dans lequel de préférence la puissance de rayonnement générée par le(s) module(s) d'éclairage d'habitacle (LM1, LM2, LM3) est supérieure à la puissance de rayonnement générée par le(s) module(s) d'éclairage d'habitacle (LM1, LM2, LM3) pendant un chenillard.
